# EUROPÄISCHE PATENTSCHRIFT

(11) **EP 4 124 572 B1**
(45) Veröffentlichungstag und Bekanntmachung des Hinweises auf die Patenterteilung: **03.04.2024**
(21) Anmeldenummer: 21188519.9
(22) Anmeldetag: 29.07.2021
(51) Int. Cl.: B64D 11/06

(54) **PASSAGIERSITZANORDNUNG MIT MODULARER ENERGIEVERSORGUNG UND PASSAGIERFLUGZEUG MIT DERARTIGER SITZANORDNUNG**
PASSENGER SEAT ASSEMBLY WITH MODULAR POWER SUPPLY AND PASSENGER AIRCRAFT WITH SUCH A SEAT ASSEMBLY
AGENCEMENT DE SIÈGE DE PASSAGER POURVU D'ALIMENTATION ÉLECTRIQUE MODULAIRE ET AVION DE TRANSPORT DES PERSONNES DOTÉ D'UN TEL AGENCEMENT DE SIÈGE

(43) Veröffentlichungstag der Anmeldung: 01.02.2023
(73) Patentinhaber: KID-Systeme GmbH, 21614 Buxtehude (DE)
(72) Erfinder: Zachäus, Matthias, 21614 Buxtehude (DE)
(74) Vertreter: Isarpatent

(56) Entgegenhaltungen:
- EP-A1- 2 128 022
- EP-A1- 3 363 737
- US-A1- 2002 195 523
- US-A1- 2015 194 776
- US-A1- 2016 306 417
- US-A1- 2020 130 844

## Beschreibung

### TECHNISCHES GEBIET DER ERFINDUNG

Die Erfindung betrifft eine Sitzanordnung für Passagiere mit einer modular aufgebauten Energieversorgungseinrichtung, ein Passagierflugzeug mit einer derartigen Sitzanordnung sowie ein Verfahren zur Energieversorgung einer Passagiersitzanordnung in einem Passagierflugzeug.

### TECHNISCHER HINTERGRUND

Persönliche elektronische Geräte ("Personal Electronic Devices", PEDs) sind heutzutage ubiquitär. Normalerweise werden diese PEDs mit dem Benutzer mitgeführt, wohin er auch reist, auch an Bord von Flugzeugen. Für den Komfort der Passagiere ist es wünschenswert, den Passagieren an Bord eines Flugzeugs die Möglichkeit zu geben, die elektrischen Energiespeicher der PEDs während ihres Aufenthalts an Bord des Flugzeugs aufzuladen oder die PEDs im Netzbetrieb zu halten. Fluggesellschaften bieten in der Regel Auflademöglichkeiten für PEDs wie Laptops, Mobiltelefone, Smartphones, Tablet-PCs und dergleichen an, bei denen USB-Anschlüsse oder Stromnetzanschlüsse für jeden Passagier einzeln an seinem jeweiligen Flugzeugsitz verwendet werden.

Für die lokale Versorgung elektrischer Verbraucher - sowohl fest installierter als auch mobiler Geräte wie PEDs - an Bord eines Flugzeugs werden lokal installierte Leistungsverteilungssysteme mit Leistungswandlern eingesetzt, an die eine Vielzahl von elektrischen Verbrauchern unterschiedlicher Leistungsanforderungen angeschlossen werden können. Die Leistungsfähigkeit eines solchen Leistungsverteilungssystems bemisst sich hauptsächlich an der maximal und zur gleichen Zeit zur Verfügung stellbaren Leistung. Je höher diese Maximalleistung ist, desto höher sind sowohl Gewicht als auch Kosten des Leistungsverteilungssystems. Daher ist insbesondere in der Luftfahrt eine Balance zwischen Leistungsfähigkeit einerseits und Gewicht und Kosten andererseits vonnöten.

Leistungsverteilungssysteme für Sitzgruppen in Passagierflugzeugen beispielsweise können PEDs aller Passagiere der Sitzgruppe gleichermaßen mit elektrischer Leistung versorgen, beispielsweise für einen Netzbetrieb und/oder ein Aufladen der Energiespeicher der PEDs.

An Passagiersitze in Passagierflugzeugen werden strenge Sicherheitsstandards gelegt, so dass beispielsweise bei Änderungen des Gewichts einer bestehenden Sitzbaugruppe, die einen bestimmten relativen Schwellwert überschreiten, üblicherweise Neuzertifizierungsprozesse durchlaufen werden müssen, um die Eignung für die Luftfahrt (Lufttüchtigkeit oder auch "airworthiness") beibehalten zu können.

Gerade bei einem Nachrüsten von bestehenden Passagiersitzgruppen mit einer elektrischen Energieversorgung und/oder Datenverbindungsleitungen ist es daher wünschenswert, Verzögerungen und/oder Kosten, die unter Umständen mit einer erneuten Lufttüchtigkeitsprüfung und -zertifizierung der Sitze einhergehen würden zu vermeiden.

Die Druckschrift US 2018/0229847 A1 offenbart ein System zur Energieversorgung von Passagiersitzen in Passagierflugzeugen, bei denen ein Leistungswandlermodul in einer Seitenwandschiene untergebracht ist. Die Druckschrift US 9,496,666 B2 offenbart einen auf einer Sitzbefestigungsschiene eines Passagierflugzeugs montierte elektrische Verteilereinheit. Die Druckschrift DE 10 2018 119 130 A1 offenbart ein auf einer Sitzbefestigungsschiene eines Passagierflugzeugs montiertes Elektronikgehäuse.

US2020/130844 A1 beschreibt ein elektrisches Verbindungssystem für einen Flugzeugpassagiersitz.

### ZUSAMMENFASSUNG DER ERFINDUNG

Eine der Aufgaben der Erfindung besteht darin, Lösungen für die Energieversorgung elektrischer Verbraucher und elektrischer Anschlüsse von Passagiersitzes in einem Passagierflugzeug zu finden, die eine Modifikation bestehender Installationen erleichtern, ohne eine Neuzertifizierung der gesamten Sitzbaugruppe notwendig zu machen.

Diese und andere Aufgaben werden durch eine Passagiersitzanordnung mit den Merkmalen des Anspruchs 1, ein Passagierflugzeug mit den Merkmalen des Anspruchs 6 sowie ein Verfahren zur Energieversorgung einer Passagiersitzanordnung in einem Passagierflugzeug mit den Merkmalen des Anspruchs 11 gelöst.

Eine wesentliche Idee der Erfindung besteht darin, eine elektrische Energieversorgungseinrichtung für Passagiersitze eines Passagierflugzeugs derart modular aufzubauen, dass die an der Sitzanordnung selbst installierten Komponenten der Versorgungseinrichtung wie beispielsweise Steckdosen, Leitungsanschlüsse sowie deren Halterungen und gegebenenfalls zuführender Verkabelung nur leichtgewichtige Teile umfassen. Die schwereren Komponenten wie etwa Spannungswandler, Sicherungen, elektrische Verteiler, Lüftungsverkleidungen und dergleichen werden in einer separaten Struktur, das heißt, in einer abgekapselten Struktur mit eigenem Gehäuse auf einer im Boden der Passagierkabine verlaufenden Sitzbefestigungsschiene installiert. Auf diese Art und Weise können bestehende Sitze und Sitzgruppen mit einer elektrischen Energieversorgung bestückt werden, ohne dass es notwendigerweise einer aufwändigen Re-Zertifizierung der Sitzbaugruppe bedarf.

Vorteilhafte Ausgestaltungen und Weiterbildungen ergeben sich aus den weiteren Unteransprüchen sowie aus der Beschreibung unter Bezugnahme auf die Figuren.

Gemäß einiger weiterer Ausführungsformen der erfindungsgemäßen Passagiersitzanordnung weist das Sitztraggestell Tragfüße für eine Sitzfläche des mindestens einen Passagiersitzes auf. Diese Tragfüße können in manchen Ausführungsformen dazu dienen, das erste Elektronikgehäuse an einem Tragfuß des Sitztraggestells zu befestigen.

Gemäß einiger weiterer Ausführungsformen der erfindungsgemäßen Passagiersitzanordnung können die elektrischen Ausgangsanschlüsse des zweiten Elektronikgehäuses USB-Buchsen, Sitzbeleuchtungsanschlüsse von Passagiersitzen, Wechselspannungsanschlüsse und/oder Sitzaktuatoranschlüsse umfassen.

Gemäß einiger Ausführungsformen des erfindungsgemäßen Passagierflugzeugs kann das Gewicht des zweiten Elektronikgehäuses weniger als 3% des Gewichtes der Sitzbaugruppe betragen.

Gemäß einiger weiterer Ausführungsformen des erfindungsgemäßen Passagierflugzeugs können die Sitzbefestigungsschienen im Kabinenboden entlang der Längsachse des Passagierflugzeugs verlaufen.

Gemäß einiger weiterer Ausführungsformen des erfindungsgemäßen Passagierflugzeugs kann die Passagiersitzanordnung mindestens zwei nebeneinander angeordnete Passagiersitze aufweisen. Dabei kann in manchen Ausführungsformen jedem der mindestens zwei nebeneinander angeordneten Passagiersitze eine Sitzbefestigungsschiene im Kabinenboden zugeordnet sein. In einigen Ausführungsformen kann die Passagiersitzanordnung mindestens zwei separate erste Elektronikgehäuse aufweisen, in welchen jeweils elektrische Leistungswandlerkomponenten angeordnet sind und welche auf unterschiedlichen der den mindestens zwei nebeneinander angeordneten Passagiersitzen zugeordneten Sitzbefestigungsschienen montiert sind.

Gemäß einiger weiterer Ausführungsformen des erfindungsgemäßen Passagierflugzeugs kann das mindestens eine erste Elektronikgehäuse Öffnungen für eine passive Luftkühlung der darin angeordneten elektrischen Leistungswandlerkomponenten aufweisen.

Gemäß einiger Ausführungsformen des erfindungsgemäßen Verfahrens kann das Gewicht des zweiten Elektronikgehäuses weniger als 3% des Gewichtes der Passagiersitzbaugruppe betragen.

Gemäß einiger Ausführungsformen des erfindungsgemäßen Verfahrens kann das Sitztraggestell Tragfüße für eine Sitzfläche des mindestens einen Passagiersitzes aufweisen. Dabei kann das Montieren des ersten Elektronikgehäuses weiterhin ein Befestigen des ersten Elektronikgehäuse an einem Tragfuß des Sitztraggestells umfassen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine schematische Illustration einer Passagiersitzanordnung für ein Passagierflugzeug gemäß einer Ausführungsform der Erfindung in Seitenansicht;
Fig. 2 eine schematische Illustration einer Passagiersitzanordnung für ein Passagierflugzeug gemäß einer Ausführungsform der Erfindung in Rückansicht;
Fig. 3 eine schematische Illustration eines Flugzeugs mit einer Passagiersitzanordnung nach Fig. 1 oder 2 gemäß einer weiteren Ausführungsform der Erfindung; und
Fig. 4 ein schematisches Flussablaufdiagramm der Schritte eines Verfahrens zur Energieversorgung einer Passagiersitzanordnung für ein Passagierflugzeug gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

Persönliche elektronische Geräte ("Personal Electronic Devices", PEDs) im Sinne dieser Erfindung umfassen alle elektronischen Geräte, die zur Unterhaltung, Kommunikation und/oder für Bürozwecke eingesetzt werden können. Zum Beispiel können PEDs alle Arten von Endgeräten umfassen, wie Laptops, Mobiltelefone, Smartphones, Handheld-Geräte, Palmtops, Tablet-PCs, GPS-Geräte, Navigationsgeräte, Audiogeräte wie MP3-Player, tragbare DVD- oder Bluray^{®}-Player oder Digitalkameras.

Passagiersitze im Sinne dieser Erfindung können jede Form struktureller Bestandteile eines Fahrzeugs umfassen, die dazu bestimmt sind, einen Fahrgast für die Dauer der Fahrt mit dem Fahrzeug aufzunehmen. Insbesondere können Passagiersitze in Flugzeugen persönlich und zumindest vorübergehend ausschließlich vom Fluggast des Flugzeugs während des Fluges benutzt werden. Sitze bzw. Passagiersitze im Sinne der Erfindung können in Sitzbaugruppen aufgeteilte Flugzeugsitze sein, aber auch Liegen, Sessel, Betten, Suiten der ersten Klasse bzw. Businessklasse oder ähnliche Sitzmöbel innerhalb eines Flugzeugs.

Leistungswandlerkomponenten im Sinne der vorliegenden Erfindung sind alle Schaltungen und Einrichtungen, die zur Umwandlung einer eingespeisten elektrischen Stromart - Gleichstrom oder Wechselstrom - in die jeweils andere, oder zur Änderung charakteristischer Parameter wie der Spannung und der Frequenz einer eingespeisten elektrischen Stromart eingesetzt werden können. Leistungswandlerkomponenten können beispielsweise Stromrichter umfassen. Derartige Stromrichter können für die Umwandlung von Wechselstrom in Gleichstrom Gleichrichter, für die Umwandlung von Gleichstrom in Wechselstrom Wechselrichter, für die Umwandlung einer Wechselstromart in eine andere Umrichter oder für die Umwandlung einer Gleichstromart in eine andere Gleichspannungswandler umfassen. Leistungswandlerkomponenten im Sinne der vorliegenden Erfindung können mit Hilfe analoger Bauteile wie Widerständen, Induktivitäten und Kondensatoren und/oder elektronischer Bauelemente auf Basis von Halbleitern ausgeführt werden, wie beispielweise Dioden, Transistoren oder Thyristoren.

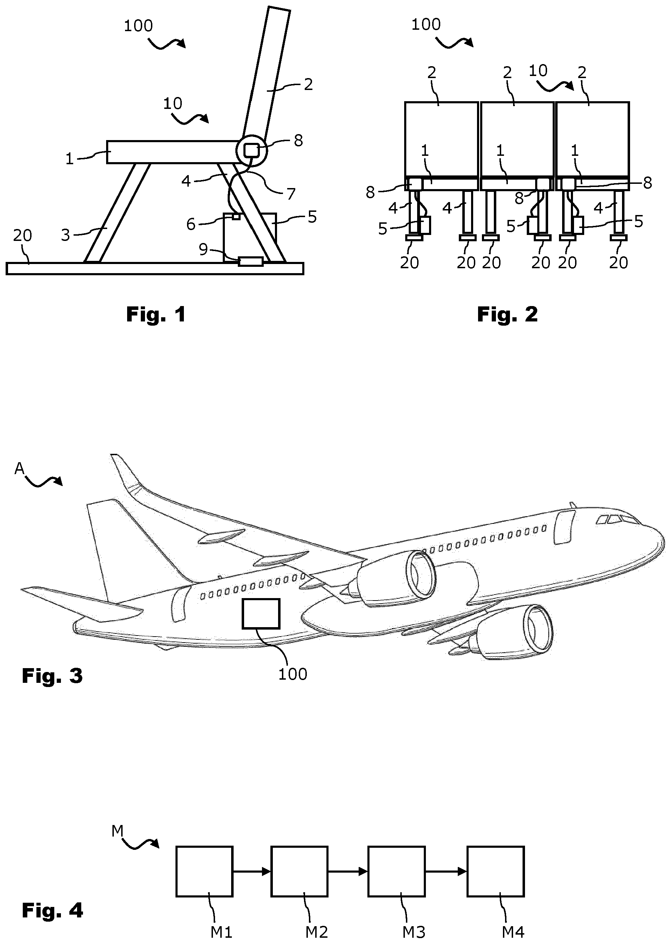

FIG. 1 zeigt eine Passagiersitzanordnung 100 in Seitenansicht in schematischem Aufbau. FIG. 2 zeigt die Passagiersitzanordnung 100 in entsprechender Rückansicht. Die Passagiersitzanordnung 100 kann beispielsweise eine Sitzbaugruppe 10 in einem Passagierflugzeug, wie etwa dem in FIG. 3 schematisch illustrierten Flugzeug A, aufweisen. Ein Passagierflugzeug A kann dabei verschiedene Sitzbaugruppen umfassen, die in einer Passagierkabine über eine oder mehrere im Passagierkabinenboden verlaufende Sitzbefestigungsschienen 20 fix bzw. fest montiert sind.

Die Sitzbaugruppe 10 kann ein oder mehrere Passagiersitze aufweisen, die beispielsweise eine Sitzfläche 1 und eine an die Sitzfläche 1 angelenkte Rückenlehne 2 aufweisen. Die Passagiersitze können dabei zum Beispiel nebeneinander angeordnet sein, d.h. mit seitlich aneinander grenzenden Sitzflächen, so dass mehrere Passagiere gleichzeitig jeweils einen Passagiersitz der Sitzbaugruppe 10 besetzen können.

Weiterhin kann die Sitzbaugruppe 10 ein Sitztraggestell mit vorderen Tragfüßen 3 und hinteren Tragfüßen 4 aufweisen, die die Sitzfläche 1 unterstützen und tragen. Über das Sitztraggestell kann die Sitzbaugruppe 10 an ein oder mehreren Sitzbefestigungsschienen 20 in der Passagierkabine montiert werden. Die Sitzbefestigungsschienen 20 können dabei beispielsweise eine Verlaufsrichtung im Kabinenboden entlang der Längsachse des Passagierflugzeugs A aufweisen, und bei mehreren Sitzbefestigungsschienen 20 insbesondere parallel zueinander verlaufen.

In oder entlang der Sitzbefestigungsschienen 20 können elektrische Zuleitungen verlaufen, über die elektrischen Energiequellen an Bord des Passagierflugzeugs A mit jeweiligen Sitzbaugruppen 10 zugeordneten Energieversorgungssystemen elektrisch verbunden und mit elektrischer Energie gespeist werden können.

Jede Passagiersitzanordnung 100 in einem Passagierflugzeug A kann dabei beispielsweise über ein separates und lokal im Passagierflugzeug A montiertes Energieversorgungssystem verfügen. Die Energieversorgungssysteme sind dabei modular aufgebaut: Ein Basismodul des jeweiligen Energieversorgungssystems ist auf einer der Sitzbefestigungsschienen 20 montierbar, während ein zugehöriges Peripheriemodul des Energieversorgungssystems an der Sitzbaugruppe 10 an geeigneter, für den Anschluss elektrischer Verbraucher geeigneter Position montiert ist. Die Energieversorgungssysteme können durch ein oder mehrere (nicht explizit dargestellte) elektrische Energiequellen in dem Passagierflugzeug A gespeist werden.

Die elektrischen Energiequellen können beispielsweise eine oder mehrere Wechselspannungsquellen, wie beispielsweise Generatoren - insbesondere Triebwerksgeneratoren oder Generatoren von Staudruckturbinen - aufweisen. Alternativ oder zusätzlich dazu können die elektrischen Energiequellen beispielsweise Gleichspannungsquellen wie etwa Photovoltaikanlagen oder Brennstoffzellen umfassen. Die elektrischen Energiequellen können über elektrische Zuleitungen, die in oder an den Sitzbefestigungsschienen 20 entlang verlaufen, mit den jeweiligen Basismodulen der Energieversorgungssysteme elektrisch gekoppelt werden.

Die Energieversorgungssysteme können beispielsweise zur Versorgung von dauerhaft installierten elektrischen Verbrauchern wie etwa Displays eines Bordentertainmentsystems an Bord eines Passagierflugzeugs, Sitzbeleuchtungen von Passagiersitzen, Sitzaktuatoren oder ähnliches sowie temporär angeschlossene elektrische Verbraucher wie beispielsweise PEDs, Powerbanks oder ähnliche Verbraucher sein, die jeweils einem Sitz der Passagiersitzanordnung 100 zugeordnet sind und für einen auf den jeweiligen Sitz gebuchten Passagier für die Dauer einer Reise zur Nutzung vorgesehen sind.

Wie in FIG. 1 und 2 dargestellt, ist das elektrische Energieversorgungssystem derart modular aufgebaut, dass das Basismodul ein erstes Elektronikgehäuse 5 aufweist, in welchem elektrische Leistungswandlerkomponenten angeordnet sind. Das erste Elektronikgehäuse 5 umfasst einen Schienenmontageadapter 9, mithilfe dessen das erste Elektronikgehäuse 5 auf oder an mindestens einer der Sitzbefestigungsschienen 20 installiert ist. Durch den horizontalen Verlauf der Sitzbefestigungsschienen 20 steht das erste Elektronikgehäuse 5 aufrecht auf dem Kabinenboden und der Vektor der Gewichtskraft des ersten Elektronikgehäuses 5 verläuft während des normalen Betriebs des Passagierflugzeugs A durch den Schienenmontageadapter 9 in die Sitzbefestigungsschiene 20 hinein. Dadurch wird die mechanische Stabilität der Montageposition des ersten Elektronikgehäuses 5 auf der Sitzbefestigungsschiene 20 erhöht, so dass auch besonders leistungsfähige und deshalb eher schwere Leistungswandlerkomponenten innerhalb des ersten Elektronikgehäuses 5 angeordnet werden können.

Zur weiteren Verbesserung der mechanischen Stabilität des ersten Elektronikgehäuses 5 kann das erste Elektronikgehäuse 5 an einer Position auf oder an der Sitzbefestigungsschiene 20 montiert werden, die sich in der Nähe eines der Tragfüße 4 des Sitztraggestells der Sitzbaugruppe 10 befindet. In diesem Fall kann das erste Elektronikgehäuse 5 über geeignete mechanische Verbinder wie etwa Schrauben, Bolzen oder Nieten an dem Tragfuß des Sitztraggestells befestigt werden. Gerade bei schweren Leistungswandlerkomponenten, die in dem ersten Elektronikgehäuse 5 verbaut sind, kann auf diese Weise das Basismodul des elektrischen Energieversorgungssystems noch besser gesichert werden.

Ein Peripheriemodul des elektrischen Energieversorgungssystems ist in einem zweiten Elektronikgehäuse 8 untergebracht, welches von dem ersten Elektronikgehäuse 5 separiert ist. Das erste Elektronikgehäuse 5 kann einen Versorgungsanschluss 6 aufweisen, über die ein oder mehrere zweite Elektronikgehäuse 8 über elektrische Zuleitungen 7 in Form drahtgebundener Verkabelung elektrisch angebunden werden können. Durch die Trennung zwischen erstem und zweitem Elektronikgehäuse 5 bzw. 8 in Basismodul und Peripheriemodul kann die Platzierung der zweiten Elektronikgehäuse 8 nach ergonomischen Gesichtspunkten an der Sitzbaugruppe 10 erfolgen. Zudem können in dem zweiten Elektronikgehäuse 8 eher leichte Komponenten des elektrischen Energieversorgungssystems untergebracht werden, so dass das Gewicht des zweiten Elektronikgehäuses 8 samt der darin untergebrachten Komponenten weniger als 3% des Gewichtes der Sitzbaugruppe 10 beträgt. Dadurch kann vorteilhafterweise das Erfordernis einer Neuzertifizierung der Sitzbaugruppe 10 aufgrund einer übermäßigen Änderung des Gesamtgewichts vermieden werden, sei es durch Nachrüstung eines elektrischen Energieversorgungssystems oder zukünftiger anderer elektrischer Komponenten.

Das zweite Elektronikgehäuse 8 beherbergt elektrische Ausgangsanschlüsse für den Anschluss von elektronischen Endgeräten, wie beispielsweise PEDs von Passagieren. Die elektrischen Ausgangsanschlüsse können zum Beispiel USB-Buchsen, Sitzbeleuchtungsanschlüsse von Passagiersitzen, Wechselspannungsanschlüsse und/oder Sitzaktuatoranschlüsse umfassen. Über die drahtgebundene Verkabelung 7 wird der Versorgungsanschluss 6 der elektrischen Leistungswandlerkomponenten des ersten Elektronikgehäuses 5 elektrisch mit den elektrischen Ausgangsanschlüssen des zweiten Elektronikgehäuses 8 verbunden.

Die elektrischen Ausgangsschnittstellen im zweiten Elektronikgehäuse 8 können insbesondere USB-Schnittstellen sein, die gemäß der USB-Power-Delivery- und/oder der USB-Battery-Charging-Spezifikation arbeiten. Elektrische Verbraucher, die an diese USB-Schnittstellen angeschlossen werden, beispielsweise PEDs von Passagieren eines Passagierflugzeugs A, können demnach aus dem Energieversorgungssystem elektrische Leistung beziehen.

In dem ersten Elektronikgehäuse 5 können Öffnungen für eine passive Luftkühlung der darin angeordneten elektrischen Leistungswandlerkomponenten vorgesehen werden. Alternativ oder zusätzlich dazu kann es auch möglich sein, die elektrischen Leistungswandlerkomponenten innerhalb des ersten Elektronikgehäuses 5 durch ein geeignetes Kühlungssystem aktiv zu kühlen.

FIG. 4 zeigt ein Flussdiagramm von Verfahrensschritten eines Verfahrens M zur Energieversorgung einer Passagiersitzanordnung in einem Passagierflugzeug, beispielsweise der im Zusammenhang mit den FIG. 1 und 2 gezeigten und erläuterten Passagiersitzanordnung 100. Das Verfahren M kann insbesondere in einem Passagierflugzeug A mit Passagiersitzanordnungen 100 wie im Zusammenhang mit FIG. 3 erläutert durchgeführt werden.

Zunächst wird in einem ersten Schritt M1 eine Passagiersitzbaugruppe 10 mit mindestens einem Passagiersitz und einem Sitztraggestell auf mindestens einer Sitzbefestigungsschiene 20, welche in einem Kabinenboden des Passagierflugzeugs A installiert ist, montiert. Danach erfolgt in einem zweiten Schritt M2 ein Montieren eines ersten Elektronikgehäuses 5, in welchem elektrische Leistungswandlerkomponenten angeordnet sind auf der mindestens einen Sitzbefestigungsschiene 20. Das erste Elektronikgehäuse 5 kann zum Beispiel einen Schienenmontageadapter 9 aufweisen und ein Vektor der Gewichtskraft des ersten Elektronikgehäuses 5 kann durch den Schienenmontageadapter 9 in die Sitzbefestigungsschiene 20 verlaufen.

Dieses erste Elektronikgehäuse 5 dient als Basismodul eines elektrischen Energieversorgungsystems für die Passagiersitzbaugruppe 10. Das Sitztraggestell kann beispielsweise Tragfüße für eine Sitzfläche 1 des mindestens einen Passagiersitzes aufweisen, so dass bei dem Montieren in Schritt M2 das erste Elektronikgehäuse 5 an einem Tragfuß 4 des Sitztraggestells befestigt werden kann.

In einem dritten Schritt M3 wird ein zweites Elektronikgehäuse 8, in welchem elektrische Ausgangsanschlüsse für den Anschluss von elektronischen Endgeräten angeordnet sind, an der Passagiersitzbaugruppe 10 montiert. Dieses zweite Elektronikgehäuse 8 ist separat von dem ersten Elektronikgehäuse 5 und dient als Peripheriemodul des elektrischen Energieversorgungsystems für die Passagiersitzbaugruppe 10. Das Gewicht des zweiten Elektronikgehäuses 8 sowie der darin untergebrachten elektrischen bzw. elektronischen Bauteile kann dabei weniger als 3% des Gewichtes der Passagiersitzbaugruppe 10 betragen, so dass vorteilhafterweise das Erfordernis einer Neuzertifizierung der Passagiersitzbaugruppe 10 aufgrund einer übermäßigen Änderung des Gesamtgewichts durch Nachrüstung eines elektrischen Energieversorgungssystems vermieden werden kann.

Schließlich wird in einem vierten Schritt M4 ein Versorgungsanschluss 6 der elektrischen Leistungswandlerkomponenten des ersten Elektronikgehäuses 5 mit den elektrischen Ausgangsanschlüssen des zweiten Elektronikgehäuses 8 über eine drahtgebundene Verkabelung 7 elektrisch verbunden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Passagiersitzanordnung (100) für ein Passagierflugzeug (A), umfassend:
eine Passagiersitzbaugruppe (10) mit mindestens einem Passagiersitz (1, 2) und einem Sitztraggestell (3, 4);
mindestens eine Sitzbefestigungsschiene (20), welche in einem Kabinenboden des Passagierflugzeugs (A) installierbar ist und in welcher das Sitztraggestell (3, 4) montiert ist;
ein erstes Elektronikgehäuse (5), in welchem elektrische Leistungswandlerkomponenten angeordnet sind und welches auf der Sitzbefestigungsschiene (20) montiert ist und welches einen Schienenmontageadapter (9) aufweist, so dass der Vektor der Gewichtskraft des ersten Elektronikgehäuses (5) durch den Schienenmontageadapter (9) in die Sitzbefestigungsschiene (20) verläuft;
ein zweites Elektronikgehäuse (8), in welchem elektrische Ausgangsanschlüsse für den Anschluss von elektronischen Endgeräten angeordnet sind und welches an der Passagiersitzbaugruppe (10) montiert ist; und
eine drahtgebundene Verkabelung (7), welche einen Versorgungsanschluss (6) der elektrischen Leistungswandlerkomponenten des ersten Elektronikgehäuses (5) elektrisch mit den elektrischen Ausgangsanschlüssen des zweiten Elektronikgehäuses (8) verbindet.

2. Passagiersitzanordnung (100) gemäß Anspruch 1, wobei das Sitztraggestell (3, 4) Tragfüße für eine Sitzfläche (1) des mindestens einen Passagiersitzes aufweist.

3. Passagiersitzanordnung (100) gemäß Anspruch 2, wobei das erste Elektronikgehäuse (5) an einem Tragfuß (4) des Sitztraggestells (3, 4) befestigt ist.

4. Passagiersitzanordnung (100) gemäß einem der Ansprüche 1 bis 3, wobei die elektrischen Ausqanqsanschlüsse des zweiten Elektronikehäuses (8) USB-Buchsen, Sitzbeleuchtungsanschlüsse von Passagiersitzen, Wechselspannungsanschlüsse und/oder Sitzaktuatoranschlüsse umfassen.

5. Passagierflugzeug (A), umfassend:
eine Passagierkabine;
mindestens eine elektrische Energiequelle; und
mindestens eine Passagiersitzanordnung (100) gemäß einem der Ansprüche 1 bis 4, deren mindestens eine Sitzbefestigungsschiene (20) im Kabinenboden der Passagierkabine montiert ist, und deren zweites Elektronikgehäuse (8) jeweils mit der mindestens einen elektrischen Energiequelle über in oder an der Sitzbefestigungsschiene (20) entlang verlaufende elektrische Zuleitungen verbunden ist.

6. Passagierflugzeug (A) gemäß Anspruch 5, wobei das Gewicht des zweiten Elektronikgehäuses (8) weniger als 3% des Gewichtes der Sitzbaugruppe (10) beträgt.

7. Passagierflugzeug (A) gemäß einem der Ansprüche 5 und 6, wobei die Sitzbefestigungsschiene (20) im Kabinenboden entlang der Längsachse des Passagierflugzeugs (A) verläuft.

8. Passagierflugzeug (A) gemäß einem der Ansprüche 5 bis 7, wobei die Passagiersitzanordnung (100) mindestens zwei nebeneinander angeordnete Passagiersitze (1, 2) aufweist.

9. Passagierflugzeug (A) gemäß Anspruch 8, wobei jedem der mindestens zwei nebeneinander angeordneten Passagiersitze (1, 2) eine Sitzbefestigungsschiene (20) im Kabinenboden zugeordnet ist, und wobei die Passagiersitzanordnung (100) mindestens zwei separate erste Elektronikgehäuse (5) aufweist, in welchen jeweils elektrische Leistungswandlerkomponenten angeordnet sind und welche auf unterschiedlichen der den mindestens zwei nebeneinander angeordneten Passagiersitzen (1, 2) zugeordneten Sitzbefestigungsschienen (20) montiert sind.

10. Passagierflugzeug (A) gemäß einem der Ansprüche 5 bis 9, wobei das mindestens eine erste Elektronikgehäuse (5) Öffnungen für eine passive Luftkühlung der darin angeordneten elektrischen Leistungswandlerkomponenten aufweist.

11. Verfahren (M) zur Energieversorgung einer Passagiersitzanordnung (100) in einem Passagierflugzeug (A), umfassend:
Montieren (M1) einer Passagiersitzbaugruppe (10) mit mindestens einem Passagiersitz (1, 2) und einem Sitztraggestell (3, 4) auf mindestens einer Sitzbefestigungsschiene (20), welche in einem Kabinenboden des Passagierflugzeugs (A) installiert ist;
Montieren (M2) eines ersten Elektronikgehäuses (5), in welchem elektrische Leistungswandlerkomponenten angeordnet sind auf der mindestens einen Sitzbefestigungsschiene (20) mittels eines Schienenmontageadapters (9), so dass der Vektor der Gewichtskraft des ersten Elektronikgehäuses (5) durch den Schienenmontageadapter (9) in die Sitzbefestigungsschiene (20) verläuft;
Montieren (M3) eines zweiten Elektronikgehäuses (8), in welchem elektrische Ausgangsanschlüsse für den Anschluss von elektronischen Endgeräten angeordnet sind, an der Passagiersitzbaugruppe (10); und
Elektrisches Verbinden (M4) eines Versorgungsanschlusses (6) der elektrischen Leistungswandlerkomponenten des ersten Elektronikgehäuses (5) mit den elektrischen Ausgangsanschlüssen des zweiten Elektronikgehäuses (8) über eine drahtgebundene Verkabelung (7).

12. Verfahren (M) gemäß Anspruch 11, wobei das Gewicht des zweiten Elektronikgehäuses (8) weniger als 3% des Gewichtes der Passagiersitzbaugruppe (10) beträgt.

13. Verfahren (M) gemäß einem der Ansprüche 11 und 12, wobei das Sitztraggestell (3, 4) Tragfüße für eine Sitzfläche (1) des mindestens einen Passagiersitzes aufweist und das Montieren (M2) des ersten Elektronikgehäuses (5) weiterhin ein Befestigen des ersten Elektronikgehäuse (5) an einem Tragfuß (4) des Sitztraggestells (3, 4) umfasst.

## Claims

1. Passenger seat arrangement (100) for a passenger aircraft (A), comprising:
a passenger seat assembly (10) having at least one passenger seat (1, 2) and a seat supporting frame (3, 4); at least one seat fastening rail (20) which can be installed in a cabin floor of the passenger aircraft (A) and in which the seat supporting frame (3, 4) is mounted; a first electronic housing (5) in which electrical power converter components are arranged and which is mounted on the seat fastening rail (20) and which has a rail mounting adapter (9) so that the vector of the weight force of the first electronic housing (5) runs through the rail mounting adapter (9) into the seat fastening rail (20);
a second electronic housing (8) in which electrical output ports for connecting electronic terminal devices are arranged and which is mounted on the passenger seat assembly (10); and
wired cabling (7) which electrically connects a supply port (6) of the electrical power converter components of the first electronic housing (5) to the electrical output ports of the second electronic housing (8).

2. Passenger seat arrangement (100) according to Claim 1, wherein the seat supporting frame (3, 4) has supporting feet for a seating surface (1) of the at least one passenger seat.

3. Passenger seat arrangement (100) according to Claim 2, wherein the first electronic housing (5) is fastened to a supporting foot (4) of the seat supporting frame (3, 4) .

4. Passenger seat arrangement (100) according to one of Claims 1 to 3, wherein the electrical output ports of the second electronic housing (8) comprise USB sockets, seat lighting ports of passenger seats, AC voltage ports and/or seat actuator ports.

5. Passenger aircraft (A) comprising:
a passenger cabin;
at least one electrical energy source; and
at least one passenger seat arrangement (100) according to one of Claims 1 to 4, the at least one seat fastening rail (20) of which is mounted in the cabin floor of the passenger cabin, and the second electronic housing (8) of which is respectively connected to the at least one electrical energy source via electrical supply lines running in or along the seat fastening rail (20).

6. Passenger aircraft (A) according to Claim 5, wherein the weight of the second electronic housing (8) is less than 3% of the weight of the seat assembly (10).

7. Passenger aircraft (A) according to either of Claims 5 and 6, wherein the seat fastening rail (20) runs in the cabin floor along the longitudinal axis of the passenger aircraft (A).

8. Passenger aircraft (A) according to one of Claims 5 to 7, wherein the passenger seat arrangement (100) has at least two passenger seats (1, 2) arranged beside one another.

9. Passenger aircraft (A) according to Claim 8, wherein a seat fastening rail (20) in the cabin floor is assigned to each of the at least two passenger seats (1, 2) arranged beside one another, and wherein the passenger seat arrangement (100) has at least two separate first electronic housings (5) in each of which electronic power converter components are arranged and which are mounted on different ones of the seat fastening rails (20) assigned to the at least two passenger seats (1, 2) arranged beside one another.

10. Passenger aircraft (A) according to one of Claims 5 to 9, wherein the at least one first electronic housing (5) has openings for passive air cooling of the electrical power converter components arranged therein.

11. Method (M) for supplying energy to a passenger seat arrangement (100) in a passenger aircraft (A), comprising:
mounting (M1) a passenger seat assembly (10) having at least one passenger seat (1, 2) and a seat supporting frame (3, 4) on at least one seat fastening rail (20) which is installed in a cabin floor of the passenger aircraft (A);
mounting (M2) a first electronic housing (5), in which electrical power converter components are arranged, on the at least one seat fastening rail (20) by means of a rail mounting adapter (9) so that the vector of the weight force of the first electronic housing (5) runs through the rail mounting adapter (9) into the seat fastening rail (20);
mounting (M3) a second electronic housing (8), in which electrical output ports for connecting electronic terminal devices are arranged, on the passenger seat assembly (10); and
electrically connecting (M4) a supply port (6) of the electrical power converter components of the first electronic housing (5) to the electrical output ports of the second electronic housing (8) via wired cabling (7).

12. Method (M) according to Claim 11, wherein the weight of the second electronic housing (8) is less than 3% of the weight of the passenger seat assembly (10).

13. Method (M) according to either of Claims 11 and 12, wherein the seat supporting frame (3, 4) has supporting feet for a seating surface (1) of the at least one passenger seat, and the mounting (M2) of the first electronic housing (5) also comprises fastening the first electronic housing (5) to a supporting foot (4) of the seat supporting frame (3, 4).

## Revendications

1. Agencement de siège de passager (100) destiné à un avion de transport de passagers (A), comprenant :
un ensemble de siège de passager (10) comprenant au moins un siège de passager (1, 2) et un châssis de support de siège (3, 4) ;
au moins un rail de fixation de siège (20) qui peut être installé dans un plancher de cabine de l'avion de transport de passagers (A) et dans lequel est monté le châssis de support de siège (3, 4) ;
un premier boîtier électronique (5) dans lequel sont disposés des composants convertisseurs de puissance électriques, qui est monté sur le rail de fixation de siège (20) et qui présente un adaptateur de montage sur rail (9), de telle sorte que le vecteur de la force de poids du premier boîtier électronique (5) passe à travers l'adaptateur de montage sur rail (9) dans le rail de fixation de siège (20) ;
un second boîtier électronique (8) dans lequel sont disposées des bornes de sortie électriques permettant la connexion de terminaux électroniques et qui est monté sur l'ensemble de siège de passager (10) ; et
un câblage filaire (7) qui relie électriquement une borne d'alimentation (6) des composants convertisseurs de puissance électriques du premier boîtier électronique (5) aux bornes de sortie électriques du second boîtier électronique (8).

2. Agencement de siège de passager (100) selon la revendication 1, dans lequel le châssis de support de siège (3, 4) présente des pieds de support destinés à une assise de siège (1) dudit au moins un siège de passager.

3. Agencement de siège de passager (100) selon la revendication 2, dans lequel le premier boîtier électronique (5) est fixé à un pied de support (4) du châssis de support de siège (3, 4).

4. Agencement de siège de passager (100) selon l'une des revendications 1 à 3, dans lequel les bornes de sortie électriques du second boîtier électronique (8) comprennent des prises USB, des bornes d'éclairage de siège de passager, des bornes de tension alternative et/ou des bornes d'actionneur de siège.

5. Avion de transport de passagers (A), comprenant :
une cabine de passagers ;
au moins une source d'énergie électrique ; et
au moins un agencement de siège passager (100) selon l'une des revendications 1 à 4, dont ledit au moins un rail de fixation de siège (20) est monté dans le plancher de cabine de la cabine de passager, et dont le second boîtier électronique (8) est relié respectivement à ladite au moins une source d'énergie électrique par l'intermédiaire de lignes d'alimentation électriques s'étendant dans le rail de fixation de siège (20) ou le long de celui-ci.

6. Avion de transport de passagers (A) selon la revendication 5, dans lequel le poids du second boîtier électronique (8) est inférieur à 3% du poids de l'ensemble de siège (10).

7. Avion de transport de passagers (A) selon l'une des revendications 5 et 6, dans lequel le rail de fixation de siège (20) s'étend dans le plancher de cabine le long de l'axe longitudinal de l'avion de transport de passagers (A).

8. Avion de transport de passagers (A) selon l'une des revendications 5 à 7, dans lequel l'agencement de siège passager (100) comporte au moins deux sièges de passagers (1, 2) disposés côte à côte.

9. Avion de transport de passagers (A) selon la revendication 8, dans lequel à chacun desdits au moins deux sièges de passagers (1, 2) disposés côte à côte est associé un rail de fixation de siège (20) dans le plancher de cabine, et dans lequel l'agencement de siège de passager (100) comprend au moins deux premiers boîtiers électroniques (5) séparés dans lesquels sont respectivement disposés des composants convertisseurs de puissance électriques et qui sont montés sur différents des rails de fixation de siège (20) associés auxdits au moins deux sièges de passagers (1, 2) disposés côte à côte.

10. Avion de transport de passagers (A) selon l'une des revendications 5 à 9, dans lequel ledit au moins un premier boîtier électronique (5) comporte des ouvertures permettant un refroidissement par air passif des composants convertisseurs de puissance électriques qui y sont disposés.

11. Procédé (M) d'alimentation en énergie d'un agencement de siège de passager (100) dans un avion de transport de passagers (A), comprenant :
le montage (M1) d'un ensemble de siège de passager (10) comprenant au moins un siège de passager (1, 2) et un châssis de support de siège (3, 4) sur au moins un rail de fixation de siège (20) installé dans un plancher de cabine de l'avion de transport de passagers (A) ;
le montage (M2) d'un premier boîtier électronique (5) dans lequel des composants convertisseurs de puissance électriques sont disposés sur ledit au moins un rail de fixation de siège (20) au moyen d'un adaptateur de montage sur rail (9), de telle sorte que le vecteur de la force de poids du premier boîtier électronique (5) passe à travers l'adaptateur de montage sur rail (9) dans le rail de fixation de siège (20) ;
le montage (M3) sur l'ensemble de siège de passager (10) d'un second boîtier électronique (8) dans lequel sont disposées des bornes de sortie électriques permettant la connexion de terminaux électroniques ; et
le fait de relier électriquement (M4) une borne d'alimentation (6) des composants convertisseurs de puissance électriques du premier boîtier électronique (5) aux bornes de sortie électriques du second boîtier électronique (8) par l'intermédiaire d'un câblage filaire (7) .

12. Procédé (M) selon la revendication 11, dans lequel le poids du second boîtier électronique (8) est inférieur à 3% du poids de l'ensemble de siège de passager (10).

13. Procédé (M) selon l'une des revendications 11 et 12, dans lequel le châssis de support de siège (3, 4) comprend des pieds de support destinés à une assise de siège (1) dudit au moins un siège de passager, et le montage (M2) du premier boîtier électronique (5) comprend en outre une fixation du premier boîtier électronique (5) à un pied de support (4) du châssis de support de siège (3, 4).
